# EUROPEAN PATENT APPLICATION

(11) **EP 2 369 507 A1**
(43) Date of publication of application: **28.09.2011**
(21) Application number: 11155687.4
(22) Date of filing: 23.02.2011
(51) Int. Cl.: G06F 17/30

(54) **Relational database for storing business objects and method for operating the same**

(30) Priority: 23.02.2010 US 307018 P
(71) Applicant: Hasso-Plattner-Institut für Softwaresystemtechnik GmbH, 14482 Potsdam (DE)
(72) Inventor: Plattner, Hasso, 69198, Schriesheim (DE); Grund, Martin, 10247, Berlin (DE); Krueger, Jens, 16515, Oranienburg (DE); Schaffner, Jan, 10247, Berlin (DE); Zeier, Alexander, 14129, Berlin (DE)
(74) Representative: Molnia, David

(57) **Abstract**

In general, the invention relates to a relational database for storing a business object instance and a method for operating the relational database. In a first aspect, the invention relates to a method for operating a relational database for storing a business object instance, wherein the business object instance has at least one attribute, wherein the relational database comprises multiple tables, wherein one table of the multiple tables is a root table, wherein the method comprises the following steps: (A) storing at least one attribute of the business object instance and/or at least one reference to at least one attribute of the business object instance in a subset of the multiple tables; (B) determining those tables of the multiple tables that contain: at least one attribute of the business object instance, and/or at least one reference to at least one attribute of the business object instance; (C) generating a vector identifying the tables determined in step (B); and (D) storing the generated vector in the root table. In a second aspect, the invention relates to a relational database for storing a business object instance, wherein the business object instance has at least one attribute, wherein the relational database comprises multiple tables, wherein one table of the multiple tables is a root table, wherein the relational database comprises: a storage component comprising multiple tables; and a relational database management system comprising a relational database management system logic for: relational database for storing a business object instance, wherein the business object instance has at least one attribute, wherein the relational database comprises multiple tables, wherein one table of the multiple tables is a root table, wherein the relational database comprises: a storage component comprising multiple tables; and a relational database management system comprising a relational database management system logic for: storing at least one attribute of the business object instance and/or at least one reference to at least one attribute of the business object instance in a subset of the multiple tables; determining those tables of the multiple tables that contain: at least one attribute of the business object instance, and/or at least one reference to at least one attribute of the business object instance; generating a vector identifying the tables determined in step (B); and storing the generated vector in the root table.

## Description

### Technicals Field

In general, the invention relates to a relational database for storing a business object instance and a method for operating the relational database.

### Background

Business object is a term coming from the field of object oriented software development. Business objects can be thought of connecting real objects with objects in an information system. In an information system, a real object may be represented as a business object instance of a business object class. For example, a sales order may be represented by a sales order business object instance specifically created for this sales order from a sales order business object class. Although business objects instances may carry data as well as methods, typically business object instances are predominantly employed for carrying and presenting data. For this purpose, the business object comprises a set of data fields. In each business object instance, each data field may be represented by an attribute. However, not all data fields necessarily comprise an attribute in each and every business object instance derived from the business object class. Depending on the application, only a few data fields of all data fields defined by the business object class actually contain attributes. Depending on the business object class, some of the data fields of a BOI may mandatorily comprise an attribute and some of the data fields may only optionally comprise attributes. There are advantages and drawbacks to using business object instances for data representation. Because business object instances resemble real objects, they are considered an intuitive way of presenting data. Structures of information systems designed according to actual business structures are easier to understand both for the developer and the user. Hence, design, maintenance, and use of an information system designed according to the business object paradigm are more time efficient and less error prone. However, the way data fields are combined in business object instances according to the metadata comprised by the business object class is not necessarily an efficient way of storing data. Quite the contrary, for instance, in a relational database, the attributes of the business object instance data fields are typically stored in separate locations, i.e. in separate records and in separate tables of the relational database.

Today, most databases are relational databases. Relational databases have been developed from the relational database model proposed by Edgar F. Codd. In the relational database model, Codd proposed thirteen rules designed to define what is required from a database management system in order for it to be considered relational. The term relational database is used herein to refer to databases that are based on Codd's relational database model, but do not necessarily comply with all of the thirteen rules. A relational database comprises a storage component with one or more tables. Each table (also referred to as relation) may comprise records (also referred to as lines), wherein each record comprises at least one entry. A relation schema defines the number and type of entries of a relation. A relational database further comprises a relational database management system (RDBMS), which in turn comprises a RDBMS logic for executing any instruction of a set of instruction that control, for example, the creation, maintenance, and the use of a database. In the RDBMS, the RDBMS logic manages data by, for example, inserting, querying, updating, deleting of data as well as creating and modifying relation schema and data access control. Typically, the RDBMS logic is capable of understanding and executing instructions written in SQL.

The main reason for storing business object instance data fields in separate locations is that most modern relational databases (i.e. their RDBMSs) make use of database normalization principles. Database normalization is the name given to the process of organizing data (for example business object instances and their data fields and attributes) in a relational database to minimize redundancy. By means of database normalization, tables are decomposed in order to produce smaller, well-structured tables. Within these well-structured tables data is isolated so that additions, deletions, and modifications of an entry can be made in just one relation and then propagated through the rest of the database via the defined relationships. Although a relational database may be described as "normalized", the degree of normalization may vary. As a consequence of database normalization, the data fields (attributes) of a single business object instance may be stored in one or more tables.

As another consequence of database normalization principles, references to preexisting attributes may be stored in reference tables as reference records instead of creating a duplicate of the preexisting attributes in the process of storing business object instances. The tables storing the (preexisting) attributes as attribute records are referred to as attribute tables. The tables storing the references as reference records are referred to as reference tables. Each reference table corresponds to at least two other tables. A reference record links a record of one of two tables to a record of the other of the two tables. For example, a reference record may link a root record of a business object instance stored in a root table to an attribute record comprising attributes stored in an attribute table. The root record of a business object instance is also referred to as business object instance record. Reference tables are particularly useful in case that an attribute record stored in an attribute table is used by more than one business object instance. For instance, the reference table linking root records to attributes stored in attribute records of an attribute table may contain one reference record linking root record A to attribute record A and another reference record linking root record B to attribute record A.

For identifying attribute records of the attribute tables, each attribute record comprises a key. The key may be a combination of one or more entries and/or attributes of the attribute record. The key may also be generated by the RDBMS and stored as an extra entry in the attribute record. For instance, for identifying a business object instance record, the RDBMS generates a root key for each business object instance record. This root key is stored in the corresponding business object instance record stored in the root table. These keys are also used for reference purposes: when a reference record links business object instance record A to attribute record A, the reference record comprises the key of business object instance record A and the key of attribute record A.

One of the root objectives of a database for storing business object instances is the ability to reconstruct a business object instance from as little information as possible. In principle, reconstruction should be possible starting from the root key of a business object instance. Using the root key as a starting point, the RDBMS identifies the root record of the business object instance (which is also referred to as the business object instance record) in the root table. For the RDBMS to proceed, the RDMBS needs to know where to look for data, i.e. attribute records or reference records linking the business object instance record to attribute records. For this purpose, the RDMBS makes use of metadata. The metadata comprises information about which data fields the business object instance comprises, what type of data is stored in the data fields, in which attribute tables the data is stored, and in which for which attribute tables reference tables need to be looked up. In particular the metadata also comprises information about the key that must be used in order to find the corresponding record. For example, in some attribute tables and reference tables, the root key is used for finding the corresponding record. However, frequently, a key must be looked up first in one table, e.g. a reference table, in order to find the corresponding record in another table, e.g. an attribute table. The metadata maybe comprised by the business object class and/or by the root record of the business object instance.

The underlying principle of reconstructing a business object instance may be visualized using a data tree representation of the business object instance. According to the data tree representation, the BOI comprises one root node, at least one intermediate node and at least one leaf node. The root node and each intermediate node of the business object has one or more child nodes. A leaf node has no child nodes. Each node has at most one parent node. The root node represents the root table and the branches leaving the root node downwards represent the root key. Each branch between two nodes represents a key passed down from the parent node to the child node. Each leaf node represents an attribute table. The attribute record corresponding to the object instance is determined from the key passed down from the parent node. Each intermediary node represents a reference table (which may, however, also comprise attributes). The record corresponding to the object instance is determined from the key passed down from the parent node. The record of an intermediary record always comprises a key that is passed down to at least one child node. From this representation the fact becomes obvious that, although the RDMBS knows every table potentially storing data regarding a business object instance from the metadata, the RDMBS must use an iterative, "walking the tree" type method for reconstructing a business object instance.

In the prior art, for reconstructing the business object instance, the RDBMS makes use of inner join operations. For instance, in a prior art business object class the root node is connected to an intermediary node, which is in turn connected to a leaf node, wherein the root node represents the root table, the intermediary node represents a reference table, and the leaf node represents an attribute table. Both the root table and the reference table each have a root keys column. The root key of the prior art business object instance is known. The RDBMS runs an inner join operation on the root table and the reference table using the root key of the prior art business object instance as the predicate of the inner joins operation. In case an attribute (record) of the stored prior art business object instance is stored in the attribute table, the resulting table comprises a single record with an attribute key suitable for identifying the corresponding attribute record in the attribute table. Then, an inner join operation is performed on the resulting table and the attribute table using the attribute key as a predicate. From the final result the attributes stored in the attribute record corresponding to the example business object instance are extracted.

A first problem of the prior art is the fact that unnecessary inner join operations may be performed frequently. Often, a business object class defines a large number of data fields for adaptation and flexibility reasons. Many of those data fields are rarely used, i.e. only few business object instances comprise attributes stored in some data fields. In the prior art example (example of the last paragraph), the business object instance may not even comprise an attribute from the attribute table. Then, there is no reference record comprising the root key in the reference table. Accordingly, in the prior art example, at least one unnecessary inner join is performed, the inner join on the root table and the reference table.

A second problem of the prior art is the fact that unnecessary round trips may be performed. Due to the hierarchical data structure of the business object instances, often, multiple round trips have to be performed in order to reconstruct an entire business object instance. In the above example, two round trips must be performed in order to reconstruct the entire business object instance, in case the business object instance comprises attribute from the attribute table. In the first round trip, an inner join operation is performed on the root table and the reference table. In the second round trip, an inner join is performed on the resulting record and the attribute table. However, in case the example business object instance does not comprise an attribute from the attribute table, still one round trip has to be performed. This one round trip is unnecessary because in the end no data necessary for the reconstruction of the business object instance is actually retrieved.

The present invention addresses those and other technical problems arising in a relational database for storing a business object instance, wherein the theses technical problems are certainly common to many relational databases in other environments and applications.

### Summary

In a first aspect, the invention relates to method for operating a relational database for storing a business object instance, wherein the business object instance has at least one attribute, wherein the relational database comprises multiple tables, wherein one table of the multiple tables is a root table, wherein the method comprises the following steps:
(A) storing at least one attribute of the business object instance and/or at least one reference to at least one attribute of the business object instance in a subset of the multiple tables;
(B) determining the tables of the multiple tables that contain:
   at least one attribute of the business object instance, and/or
   at least one reference to at least one attribute of the business object instance;
(C) generating a vector identifying the tables determined in step (B); and
(D) storing the generated vector in the root table.

According to the first aspect, the invention relates to a method for operating a relational database for storing a business object instance. The multiple tables may be all tables of the relational database. The multiple tables may also be a subset of all tables of the relational database. Storing a business object in the multiple tables refers to the process, in which all additional data necessary for reconstructing the business object instance are stored in the multiple tables. Duplicates of preexisting data may be stored in the course of step (A). Preferably, however, instead of storing duplicates, references are stored referring to the preexisting data. In the latter case, only a part of the business object instance is stored. Data corresponding to the business object instance may be stored in all of the multiple tables. However, in most cases data corresponding to the business object instance are only stored in some of the multiple tables. Therefore, those tables are determined from the multiple tables that that contain data corresponding to the stored business object instance, i.e. that contain: one or more attributes of the at least one attribute, and/or one or more references to one or more attributes of the at least one. Data corresponding to the stored business object instance are, for instance, attribute records and reference records. Records corresponding to the stored business object instance also include records that have not explicitly been stored in the course of storing the business object instance in step (A). Accordingly, records corresponding to the stored business object instance also include preexisting records. In step (C), a vector is generated identifying the tables determined in step (B). A vector may assume any kind of data format, for example, a bit vector or any other possible representation suitable to identify any possible set of the multiple tables. When a business object instance is stored in the multiple tables, one table is the root table. Therein a root record is stored, which represents the root node in the context of business object data tree model. The generated vector is stored in the root record of the corresponding business object instance.

The first aspect comprises the advantage that, during reconstructing the stored business object instance, no unnecessary operations and round trips must be performed. As an example, the relational database, upon request for reconstructing the stored business object instance, identifies the root record in the root table. From the root record, the relational database may read out the vector. From the vector, the relational database identifies the set of the multiple tables, i.e. all tables that actually contain data corresponding to the stored business object instance. When the relational database reconstructs the stored business object instance, for instance, by means of an iterative, "walking the tree" type method, the relational database does not perform any unnecessary operations on tables that do not contain data corresponding to the stored business object instance. Accordingly, unnecessary operations and round trips are avoided saving time as well as network and computing resources.

In some embodiments of the first aspect, attributes of the business object instance are stored in attribute records of the multiple tables, references to one or more attributes are stored in reference records of the multiple tables, and the generated vector is stored in a root record of the root table.

In some embodiments of the first aspect, the vector is a bit vector comprising multiple bits, wherein each bit of the multiple bits refers to one table of the multiple tables.

According to those embodiments, for a business object class defining, for example, five data fields, wherein each of the data fields is stored in another table, there are five tables. In this case, the bit vector may then comprise one, two, three, four, or five bits. If only the first three of the five tables are actually used to store data for a specific business object instance, the corresponding bit vector may be "1 1 1 0 0". However, fewer bits may also be employed. For example, fewer bits may be employed, if one of the tables always comprises a record corresponding to the business object instance. The root table typically always comprises the root record. Accordingly, a bit referring to the root table may be omitted.

In some embodiments of the first aspect, each table of the multiple tables refers to one bit of the multiple bits.

In some embodiments of the first aspect, the vector comprises a data type suitable for identifying any subset of the multiple tables.

In some embodiments of the first aspect, the stored business object instance is identifiable by a root key and the method further comprises the steps:
(A1) storing the root key in the root table, preferably in the root record.

In order to identify the root record (also referred to as the business object instance record), the root key is assigned to the root record. The root key is stored in the root record. In the root table, every root record represents a different business object instance and comprises a different root key. Accordingly, using the root key of the business object instance, the root record representing the business object instance can be identified and read out. The root record may comprise the metadata of the business object class/instance.

In some embodiments of the first aspect, the method further comprises the step: reading out, in parallel, each record that comprises the root key and that contains one or more attributes of the at least one attribute and/or one or more references to one or more attributes of the at least one attribute.

According to those embodiments, all records that correspond to the stored business object instance and comprise the root key are read out simultaneously. For this purpose, the relational database determines from the metadata of the stored business object instance information tables comprise records that comprise the root key. Those embodiments are advantageous because the records comprising the root key are read out time efficiently.

In some embodiments of the first aspect, the method further comprises the step:
(A2) storing the root key in each record comprising an attribute of the at least one attribute or a reference to an attribute of the at least one attribute.

According to those embodiments, all records that correspond to the stored business object instance comprise the root key. Accordingly all records necessary to reconstruct the stored business object instance can be read out simultaneously, in a single round trip. Those embodiments are advantageous, because the business object instance is reconstructed very time efficiently.

In some embodiments of the first aspect, the method further comprises the following steps:
(E) receiving a query for the stored business object instance from a client, wherein the query preferably identifies the root key;
(F) identifying the root record in the root table, preferably via the root key;
(G) reading out the vector from the root record; and
(H) identifying the tables determined in step (B) from the read out vector.

According to those embodiments, a client may query the relational database for the stored business object instance, by submitting a query. The query is submitted to the relational database, wherein the query preferably identifies the root key. Thus, the query contains either the root key itself or information suitable for identifying the root key. The latter is, for example, information suitable to identify the root record in the root table, wherein the root record corresponds to the business object instance. From the root record, the root key and, optionally, the metadata may be retrieved.

In some embodiments of the first aspect, a metadata identifies the multiple tables and the metadata identifies a key type stored in each table of the multiple tables, wherein the method further comprises the step:
(A1.1) storing metadata in the root table, preferably in the root record.

According to those embodiments, the metadata corresponding to the business object instance/class is stored in the root record of the business object instance. This is advantageous, because the root record is identifiable via the root key and as soon as the root key of the business object instance to be reconstructed is known, the metadata can be retrieved/extracted from the root record.

In some embodiments of the first aspect, the relational database is an in-memory database.

In some embodiment of the first aspect, the relational database is a column store database and, preferably, each column storing the root key is compressed using a single dictionary.

According to those embodiments, all data is stored in a column oriented way. In addition, the root key column is compressed using dictionary encoding, where the domain values (the encoded keys of the dictionary) are preferably bit compressed. The advantage of the dictionary compression is that domain knowledge is encapsulated. Thus, the same dictionary may be used for each column storing the root key, although the different root key columns are located in different tables. Consequently the additional memory consumption for the additional root key column is drastically reduced.

In a second aspect, the invention relates to a relational database for storing a business object instance, wherein the business object instance has at least one attribute, wherein the relational database comprises multiple tables, wherein one table of the multiple tables is a root table, wherein the relational database comprises:
a storage component comprising multiple tables; and
a relational database management system comprising a relational database management system logic for:
   storing the at least one attribute in a subset of the multiple tables as one or more attributes and/or as one or more references to one or more attributes;
   determining those tables of the multiple tables that contain:
      one or more attributes of the at least one attribute, and/or
      one or more references to one or more attributes of the at least one attribute;
   generating a vector identifying the tables determined in step (B); and
   storing the generated vector in the root table.

### Description of the Drawings

The details of one or more embodiments of the invention are set forth in the accompanying drawings and the description below. Other features and advantages of the invention will be apparent from the description and the drawings, and from the claims.
Fig. 1 shows a schematic of an embodiment of a relational database and a client connected to the relational database.
Fig. 2 shows a schematic of a first embodiment of a business object instance class and business object instance derived from the business object class, where in the schematic illustrates the way a business object instance is stored in the relational database of Fig.1.
Fig. 3 shows a flow diagram of the first embodiment of a method for operating the relational database of Fig. 1.
Fig. 4 shows a block diagram of a machine in the example form of a computer system within which a set of instructions, for causing the machine perform any one or more of the methodologies discussed herein, may be executed.
Fig. 5 shows a schematic of a second embodiment of a business object instance class and business object instance derived from the business object class, where in the schematic illustrates the way a business object instance is stored in the relational database of Fig.1.

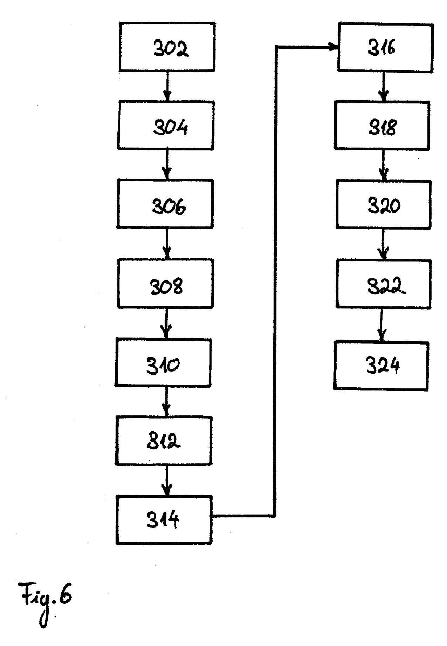

Fig. 6 shows a flow diagram of the second embodiment of a method for operating the relational database of Fig. 1.

Like reference symbols in the various drawings indicate like elements.

### Detailed Description

In the following description, for purpose of explanation, numerous specific details are set forth in order to provide a thorough understanding of some example embodiments. It will be evident, however, to one skilled in the art that the present invention may be practiced without theses specific details.

Example embodiments are described herein in context of a relational database 100 and a client 200 connected to the relational database 100, which provides an example of an electronic data environment within which a method for operating a relational database for storing a business object instance may be deployed. However, it will be appreciated that the described technology may be deployed in any electronic data environment, and is not limited to a relational database system and may find application in a wide variety of data environments. Furthermore, while these components are herein described as being implemented using a client-server architecture, it will be appreciated that other architectures (for example, a peer-to-peer or distributed architecture) may also deployed.

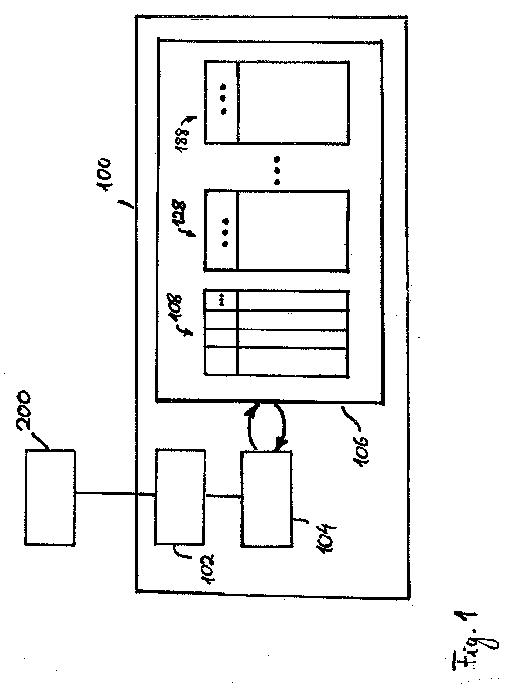

An embodiment of the present invention, a relational database 100 for storing a business object instance, is shown in Fig. 1. The relational database 100 comprises a communication interface 102, a relational database management system (RDBMS) 104 and a storage component 106 comprising multiple tables. The relational database is communicatively connected to a client 200 via the communication interface 200. The communication interface 200 of the relational database 100 allows for receiving messages such as business object instances to be stored, queries for stored business object instances, signaling messages and/or other types of messages. The communication interface 102 of the relational database 100 also allows for submitting messages such as stored and reconstructed business object instances, signaling messages and/or other types of messages. The communication interface 102 is operatively and/or communicatively connected to the RDBMS 104. The RDBMS 104 comprises a RDBMS logic, which is suitable for executing any instruction of a set of instructions that control, for example, the creation, maintenance, and the use of tables and records of the storage component 106. Accordingly, the set of instructions manages data by, for example, inserting, querying, updating, deleting of tables and/or records as well as creating and modifying relation schema and data access control. The RDBMS logic is preferably suitable for executing instructions written in SQL and the set of instruction preferably comprise SQL instructions. The RDBMS 104 is suitable for receiving messages such as business object instances to be stored, queries for stored business object instances, signaling messages and/or other types of messages from the client 200 via the communication interface 102. Further the RDBMS 104 is also suitable for submitting messages such as stored and reconstructed business object instances, signaling messages and/or other types of messages from the client 200 via the communication interface 102. In the physical layer, the storage component 106 may be an integral part of the relation database 100 or a separate part, which is connected to the relation database 100.

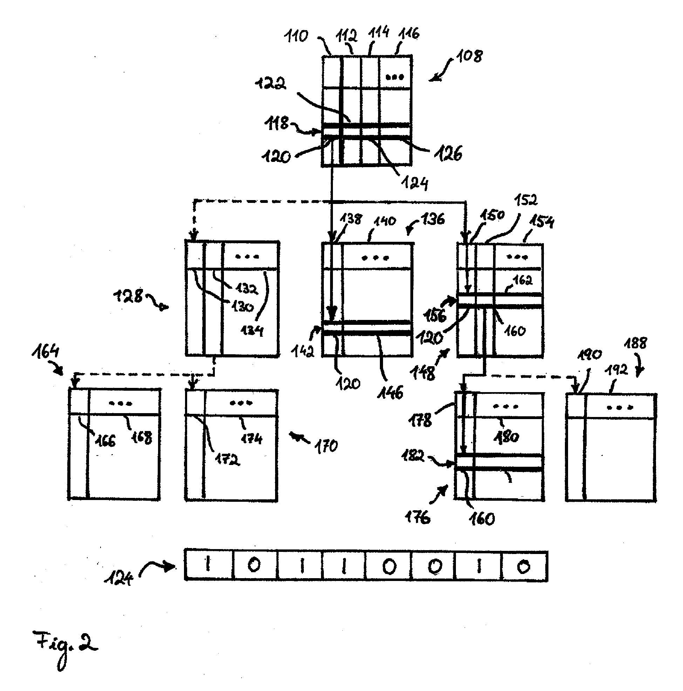

A representation of an example business object class and an example business object instance according to a first embodiment of the invention is shown in Fig. 2. The example business object instance can be stored by the relational database 100. Fig. 2 shows in total eight tables 108, 128, 136, 148, 164, 170, 176, 188. These eight tables are necessary and sufficient to store any possible business object instance of the business object class. In this example, these eight tables may be the only tables comprised by the storage component 106. However, there may be more tables, in particular in the case when the relational database 100 is suitable for storing business object instances derived from other business object classes apart from the example business object class.

The table 108 is the root table 108 of the example business object instance to be stored. The root table 108 comprises a root key column 110, a metadata column 112, a vector column 114 and other columns 116. For the example business object instance, the root column comprises a record 118, the root record 118. In the root key column 110, the record 118 comprises the root key 120 of the example business object instance. In the metadata column 112, the root record 118 comprises metadata 122 of the example business object instance. The metadata 122 indicates that there are eight tables that potentially comprise records corresponding to the example business object instance (although in fact only four of the eight tables contain records corresponding to the example business object instance). The metadata 122 indicates that these eight tables are the tables 108, 128, 136, 148, 164, 170, 176, 188. The metadata 122 indicates the data fields of the example business object instance/class, i.e. the attributes potentially comprised by the example business object instance. And the metadata 122 indicates the location (table and column) of each attribute potentially comprised by the example object instance. Further, the metadata 122 indicates key and reference related information, for example, the type of keys required for identifying the records corresponding to the example business object instance and the location (table and column) of the required keys. Typically, the metadata 122 is identical for each business object instance derived from a business object class. However, the same root table 108 may be used for business object instances derived from different business object classes, if the root table comprises a metadata column 112. In the vector column 114, the root record 118 comprises a vector 124. Preferably, the vector 124 is a bit vector 124 comprising multiple bits, wherein each bit of the multiple bits refers to one table of the eight tables. In the first embodiment, the bit vector 124 comprises eight bits. As will be described, only four of the eight tables are actually used to store records for the example business object instance. In accordance, the bit vector is " 1 0 1 1 0 0 1 0 " indicating that each of the tables 108, 136, 148, and 176 comprises at least one record corresponding to the example business object instance and that none of the tables 128, 164, 170, and 188 comprises at least one record corresponding to the example business object instance. Further, the root record 118 comprises other entries in the other columns 116. These may comprise attributes of the example business object instance or any other information related to the example business object instance.

The table 128 is a reference table 128 of the business object instance/class. The reference table 128 comprises a root key column 130, a reference key column 132, and other columns 134. The reference table 128 does not comprise a record corresponding to the example business object instance. In particular, the root key column does not comprise the root key 118.

The table 164 is an attribute table 164. The attribute table 164 comprises a reference key column 166, which corresponds to the reference key column 132 of reference table 128, and other columns 168. Because reference table 128 does not comprise a reference record corresponding to the example business object instance, which links the root record 118 to any of the records of attribute table 164, attribute table 164 does not comprise any records corresponding to the example business object instance.

From an analogous line of argument follows that the table 170, an attribute table 170, neither comprises a record corresponding to the example business object instance. The attribute table 170 comprises a reference key column 172, which corresponds to the reference key column 132 of reference table 128, and other columns 174.

The table 136 is an attribute table 136. The attribute table 136 comprises a root key column 138 and other columns 140. The attribute table 136 comprises an attribute record 142, wherein the attribute record 142 comprises the root key 120 of the root record 118 in the root key column 138. Accordingly, the attribute table 136 comprises a record (i.e. the attribute record 142) corresponding to the example business object instance. The attribute record 142 comprises other entries 146 in the other columns 140. The other entries 146 comprise one or more attributes of the example business object instance. Optionally, the other entries 146 comprise other information and/or metadata regarding the example business object instance.

The table 148 is a reference table 148. The reference table 148 comprises a root key column 150, a reference key column 152, and other columns 154. The reference table 148 comprises a reference record 156. The reference record 156 comprises the root key 120 in the root key column 150 and a reference key 160 in the reference key column 160. The reference record 156 optionally comprises other entries 162 in the other columns 154. The reference record, for instance, may comprise attributes and other information or metadata regarding the example object instance.

The table 176 is an attribute table 176. The attribute table 176 comprises a reference key column 178 corresponding to the reference key column 152. The attribute table 176 further comprises other columns 180. The attribute table 176 comprises an attribute record 182. The attribute record 182 comprises the reference key 160 in the reference key column 178. Accordingly, the attribute table 176 comprises a record (i.e. the attribute record 182) corresponding to the example business object instance. The attribute record 182 comprises other entries 186 in the other columns 180. The other entries 186 comprise one or more attributes of the example business object instance. Optionally, the other entries 186 comprise other information and/or metadata regarding the example business object instance.

The table 188 is an attribute table 188. The attribute table 188 comprises a reference key column 190 and other columns 192. Although the reference table 148 does comprise a reference record 148 with the reference key 160, the attribute table 188 does not comprise a record with the reference key 160. Accordingly, the attribute table 188 does not comprise a record corresponding to the example business object instance.

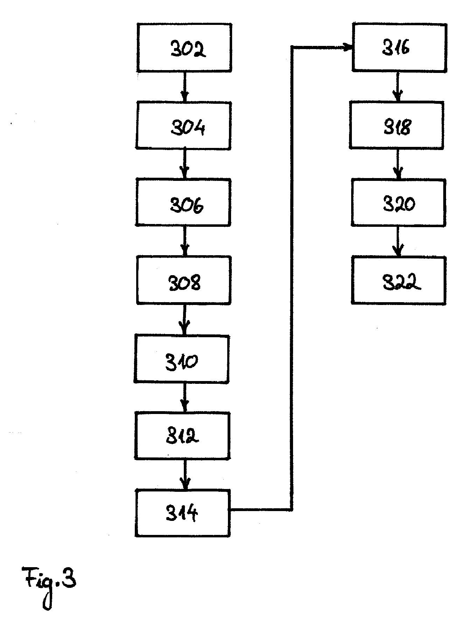

According to the first embodiment of the present invention, Fig. 3 shows a flow diagram of a method for operating the relational database 100 for storing a business object instance. The method is preferably implemented as a set of instruction, which can be executed by the RDBMS logic of the RDBMS 104 of the relational database 100. The relational database 100, for example, receives a business object instance from a client 200. By means of the RDBMS logic, in step 302, the relational database 100 stores the business object instance in the multiple tables comprised by the storage component 106. Thereby, in step 304, the relational database 100 generates a root key, by which the business object instance and in particular a root record of the business object instance is identifiable. In step 306, the relational database 100 stores the root key in the root record. In step 308, the relational database 100 stores metadata corresponding to the business object instance in the root record. In step 310, the relational database 100 determines a set from the multiple tables, wherein the set consists of each table that contains at least one record corresponding to the stored business object instance. In step 312, the relational database 100 generates a vector identifying the determined set. In step 314, the relational database 100 stores the vector in a root record stored in a root table comprised by the multiple tables. In step 316, the relational database 100 receives a query for the stored business object instance from the client 200, wherein the query identifies the root key. In step 318, the RDBMS identifies the root record in the root table via the root key. In step 320, the relational database 100 reads out the vector from the root record. In step 322 the RDBMS identifies the tables of the set from the read out vector.

In the following, the actual steps are described, which are performed when storing and reconstructing the example business object instance of Fig. 2 according to the first embodiment of the invention. The client 200 submits the example business object instance to the relational database 100 via the communication interface 102. In step 302, the storing of the example business object instance in the multiple tables comprised by the storage component 106, the relational database 100 analyzes the received business object instance. Thereby, the relational database 100 identifies the example business object instance class of the example business object instance. From the example business object instance class, the relational database 100 generates or obtains the metadata 122. Then, in step 304, the relational database 100 generates the root key 120. In the step 306, the relational database 100 stores the root key 120 in the root record 118. In the step 308, the relational database 100 stores the metadata 122 in the root record 118. As part of the storing the example business object instance in the multiple tables, the relational database 100 analyzes the example business object instance and generates reference record 156 and the attribute records 142 and 182 and stores: reference record 156 in reference table 148; attribute record 142 in attribute table 136; and attribute record 182 in attribute table 176. In step 310, the RDBMS determines the set comprising the tables 108, 136, 148, and 176 that comprise records corresponding to the example business object instance. In step 312, the relational database 100 generates a bit vector 124 identifying the determined set. The bit vector 124 comprises eight bits, one bit for every table of the multiple tables (tables 108, 128, 136, 148, 164, 170, 176, 188), wherein the bit vector reads: " 1 0 1 1 0 0 1 0 ". From the metadata 122 and the bit vector 124, the relational database 100 can determine which table comprises at least one record corresponding to the example business object instance. In step 314, the relational database 100, stores the bit vector 124 in the root record 118. The relational database 100 may reconstruct the stored example business object instance upon request. In step 316, the relational database 100 receives a query for the stored example business object instance from the client 200, wherein the query identifies the root key 120. In step 318, the relational database 100 identifies the root record 118 in the root table 108 via the root key 120. In step 320, the relational database 100 reads out the bit vector 124 from the root record 118. In step 322, the relational database 100 identifies the tables of the set, i.e. the tables 108, 136, 148, and 176, which comprise records corresponding to the example business object instance, from the read out bit vector 124.

According to the first embodiment of the invention, the relational database 100 avoids running unnecessary operations on tables 128, 164, 170, and 188, because the relational database 100 determines from the bit vector 124 that only tables 108, 136, 148, and 176 actually contain records corresponding to the example business object instance. Hence, in comparison to the prior art, the relational database 100 is more efficient with regard to time and computing resources.

### Example Application

An example application of the relational database 100 for storing business object instances and the methods for operating the relational database for storing business object instances according to the first embodiment is the storage of sales orders business object instances derived from a sales orders business object class. In a very simplistic example of an according sales order business object class, the sales order business object instances derived from the sales order business object class may comprise four data fields: "Date", "Items", "Delivery", and "Business Partner". According to the metadata of the sales order business object class, for a sales order business object instance, the attribute of the data field "Date" is stored in the root record, the attribute of the data field "Items" is stored in an items attribute table, the attribute of the data field "Delivery" is stored in a delivery attribute table, and the attribute of the the data field "Business Partner" is stored in the business partner attribute table. Each of the tables root table, items attribute table, and delivery attribute table comprises a root key column. The business partner table, however, does not comprise a root key table because typically different sales order business object instances refer to the same business partner. Accordingly, the metadata of the sales order business object class refers to a business partner reference table. The latter comprises a root key column and a business partner reference key column. Whenever a sales order business object instance is stored in the relational database 100 according to the first embodiment, a root record is stored in the root table with the date attribute. In case the sales order business object instance to be stored comprises an item attribute, an item attribute record is stored in the item attribute table. In case the sales order business object instance to be stored comprises an item attribute, an item attribute record is stored in the item attribute table. In case the sales order business object instance to be stored comprises a delivery attribute, a delivery attribute record is stored in the delivery attribute table. In case the sales order business object instance to be stored comprises a business partner attribute, a business partner reference record is stored in the business partner reference table. Only in case the business partner attribute is not already in existence, a new business partner attribute is stored in the business partner attribute table. Thereby, redundancies are avoided. In the course of storing the sales order business object instance, a bit vector is determined indicating the tables actually comprising records corresponding to the sales order business object instance and stored in the root record. When the sales order business object instance needs to be reconstructed by the relational database 100, then, according to the first embodiment of the invention, the relational database 100 avoids running unnecessary operations on tables, because the relational database 100 determines the tables actually containing records corresponding to the sales order business object instance from the bit vector. Hence, in comparison to the prior art, the relational database according to the first embodiment is more efficient with regard to time and computing resources.

### Example Machine

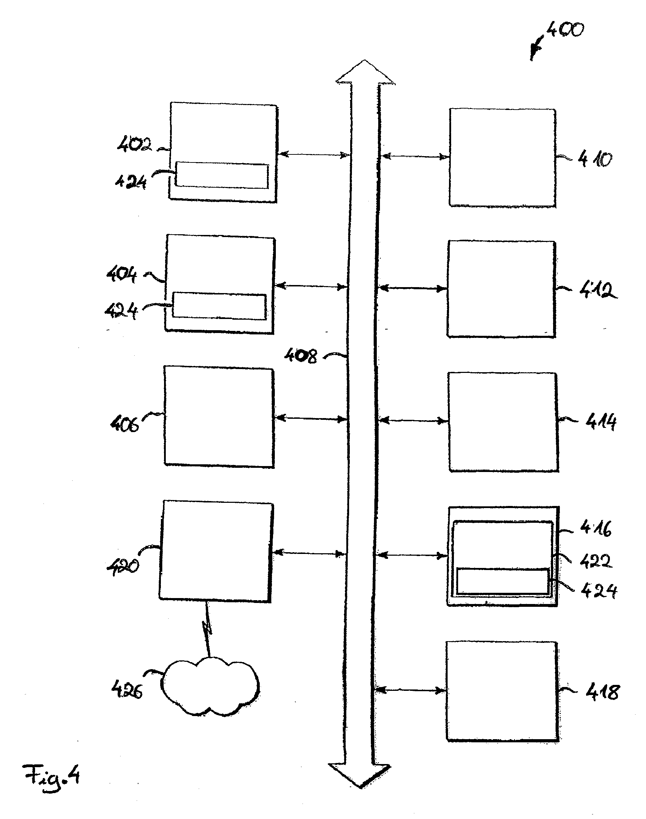

Figure 4 is a block diagram of a machine in the example form of a system 500 within which a set of instructions, for causing the machine to perform any one or more of the methodologies discussed herein, may be executed. The system for running a client (herein also referred to as 'client') and the system for running a relational database (herein also referred to as 'relational database') may be an according machine. In alternative embodiments, the machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment. The machine may be a personal computer (PC), a point of sale terminal, a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute instructions to perform any one or more of the methodologies discussed herein.

The example computer system 400 includes a processor 402 (e.g., a central processing unit (CPU), a graphics processing unit (GPU) or both), a main memory 404 and a static memory 406, which communicate with each other via a bus 408. The computer system 400 may further include a video display unit 410 (e.g., a liquid crystal display (LCD) or a cathode ray tube (CRT)). The computer system 400 also includes an alphanumeric input device 412 (e.g., a keyboard), a user interface (UI) navigation device 414 (e.g., a mouse), a disk drive unit 416, a signal generation device 418 (e.g., a speaker) and a network interface device 420.

The disk drive unit 416 includes a machine-readable medium 422 on which is stored one or more sets of instructions and data structures (e.g., software 424) embodying or utilized by any one or more of the methodologies or functions described herein. The software 424 may also reside, completely or at least partially, within the main memory 404 and/or within the processor 402 during execution thereof by the computer system 400, the main memory 404 and the processor 402 also constituting machine-readable media.

The software 424 may further be transmitted or received over a network 426 via the network interface device 420 utilizing any one of a number of well-known transfer protocols (e.g., HTTP) and embodied as a transmission medium (e.g., a corner wave signal).

While the machine-readable medium 422 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media. Example embodiments may be implemented in digital electronic circuitry, or in computer hardware, firmware, software, or in combinations of them. Example embodiments may be implemented as a computer program product, e.g., a computer program tangibly embodied in an information carrier, e.g., in a machine-readable storage device or in a propagated signal, for execution by, or to control the operation of, data processing apparatus, e.g., a programmable processor, a computer, or multiple computers.

Instructions constituting a computer program can be written in any form of programming language, including compiled or interpreted languages, and may be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

Example embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

Certain applications or processes are described herein as including a number of components, modules or mechanisms. A component, module or a mechanism may be a unit of distinct functionality that can provide information to, and receive information from, other modules. Accordingly, the described modules may be regarded as being communicatively coupled. Modules may also initiate communication with input or output devices, and can operate on a resource (e.g., a collection of information). The modules may include hardware circuitry, optical components, single or multi-processor circuits, memory circuits, software program modules and objects, firmware, and combinations thereof, as appropriate for particular implementations of various embodiments.

### Alternative Embodiments

There are various possibilities to implement and carry out methods and apparatus according to the invention. An alternative will be presented in the following, others will be apparent to the person skilled in the art based on the summary, the detailed description, and the claims at hand.

Depending on the application, an alternative embodiment of the invention may be preferred. In the alternative embodiment, the business object class is designed so that every table of the multiple tables comprises a root key column.

The relational database 100 for storing a business object instance according to the alternative embodiment is shown in Fig. 1. The relational database 100 comprises a communication interface 102, a relational database management system (RDBMS) 104 and a storage component 106 comprising multiple tables. The relational database is communicatively connected to a client 200 via the communication interface 200. The communication interface 200 of the relational database 100 allows for receiving messages such as business object instances to be stored, queries for stored business object instances, signaling messages and/or other types of messages. The communication interface 102 of the relational database 100 also allows for submitting messages such as stored and reconstructed business object instances, signaling messages and/or other types of messages. The communication interface 102 is operatively and/or communicatively connected to the RDBMS 104. The RDBMS 104 comprises a RDBMS logic, which is suitable for executing any instruction of a set of instructions that control, for example, the creation, maintenance, and the use of tables and records of the storage component 106. Accordingly, the set of instructions manages data by, for example, inserting, querying, updating, deleting of tables and/or records as well as creating and modifying relation schema and data access control. The RDBMS logic is preferably suitable for executing instructions written in SQL and the set of instruction preferably comprises SQL instructions. The RDBMS 104 is suitable for receiving messages such as business object instances to be stored, queries for stored business object instances, signaling messages and/or other types of messages from the client 200 via the communication interface 102. Further the RDBMS 104 is also suitable for submitting messages such as stored and reconstructed business object instances, signaling messages and/or other types of messages from the client 200 via the communication interface 102. In the physical layer, the storage component 106 may be an integral part of the relation database 100 or a separate part, which is connected to the relation database 100.

A representation of an example business object class and an example business object instance according to the alternative embodiment is shown in Fig. 4. The example business object class can be stored by the relational database 100. Although the example business object instance of Fig. 4 comprises the same data fields as the example business object instance of Fig. 2., Fig. 4 in total shows only six tables 108, 136, 164, 170, 176, 188 instead of eight. This is due to the fact that in the alternative embodiment, every record corresponding to the business object instance comprises a root key. Accordingly, these six tables are necessary and sufficient to store any possible business object instance of the example business object class. In this example, these six tables may be the only tables comprised by the storage component 106. However, there may be more tables, in particular in the case when the relational database 100 is suitable for storing business object instances derived from other business object classes apart from the example business object class.

The table 108 is the root table 108 of the business object instance/class. The root table 108 comprises a root key column 110, a metadata column 112, a vector column 114 and other columns 116. For the example business object instance, the root column comprises a record 118, the root record 118. In the root key column 110, the record 118 comprises the root key 120 of the example business object instance. In the metadata column 112, the root record 118 comprises metadata 122 of the example business object instance. The metadata 122 indicates that there are six tables that potentially comprise records corresponding to the example business object instance (although in fact only three of the six tables contain records corresponding to the example business object instance). The metadata 122 indicates that these eight tables are the tables 108, 136, 164, 170, 176, 188. The metadata 122 indicates the data fields of the example business object/class, i.e. the attributes potentially comprised by the business object instance. And the metadata 122 indicates the location (table and column) of each attribute potentially comprised by the example object instance. Further, the metadata 122 indicates root key related information, for example, the location of the root key columns. Typically, the metadata 122 is identical for each business object instance derived from a business object class. However, the same root table 108 may be used for business object instances derived from different business object classes, if the root table comprises a metadata column 112. In the vector column 114, the root record 118 comprises a vector 124. Preferably, the vector 124 is a bit vector 124 comprising multiple bits, wherein each bit of the multiple bits refers to one table of the six tables. In the alternative embodiment, the bit vector 124 comprises six bits. As will be described, only three of the six tables are actually used to store records for the example business object instance. In accordance, the bit vector 124 is " 1 0 0 1 1 0 " indicating that each of the tables 108, 136, and 176 comprises at least one record corresponding to the example business object instance and that none of the tables 164, 170, and 188. Further, the root record 118 comprises other entries in the other columns 116. These may comprise attributes of the example business object instance or any other information related to the example business object instance.

The table 164 is an attribute table 164. The attribute table 164 comprises a root key column 166, which corresponds to the root key column 110 of the root table 118, and other columns 168. Because attribute table 164 does not comprise an attribute record with the root key 120 in the root key column 166, attribute table 164 does not comprise any records corresponding to the example business object instance.

From an analogous line of argument follows that the table 170, an attribute table 170, neither comprises a record corresponding to the example business object instance. The attribute table 170 comprises a root key column 172, which corresponds to the root key column 110 of the root table 108, and other columns 174.

The table 136 is an attribute table 136. The attribute table 136 comprises a root key column 138 and other columns 140. The attribute table 136 comprises an attribute record 142, wherein the attribute record 142 comprises the root key 120 of the root record 118 in the root key column 138.

Accordingly, the attribute table 136 comprises a record (i.e. the attribute record 142) corresponding to the example business object instance. The attribute record 142 comprises other entries 146 in the other columns 140. The other entries 146 comprise one or more attributes of the example business object instance. Optionally, the other entries 146 comprise other information and/or metadata regarding the example business object instance.

The table 176 is an attribute table 176. The attribute table 176 comprises a root key column 178 and other columns 180. The attribute table 176 comprises an attribute record 182, wherein the attribute record 182 comprises the root key 120 of the root record 118 in the root key column 178. Accordingly, the attribute table 176 comprises a record (i.e. the attribute record 182) corresponding to the example business object instance. The attribute record 182 comprises other entries 186 in the other columns 180. The other entries 186 comprise one or more attributes of the example business object instance. Optionally, the other entries 186 comprise other information and/or metadata regarding the example business object instance.

The table 188 is an attribute table 188. The attribute table 188 comprises a root key column 190 and other columns 192. The attribute table 188 does not comprise a record with the root key 120. Accordingly, the attribute table 188 does not comprise a record corresponding to the example business object instance.

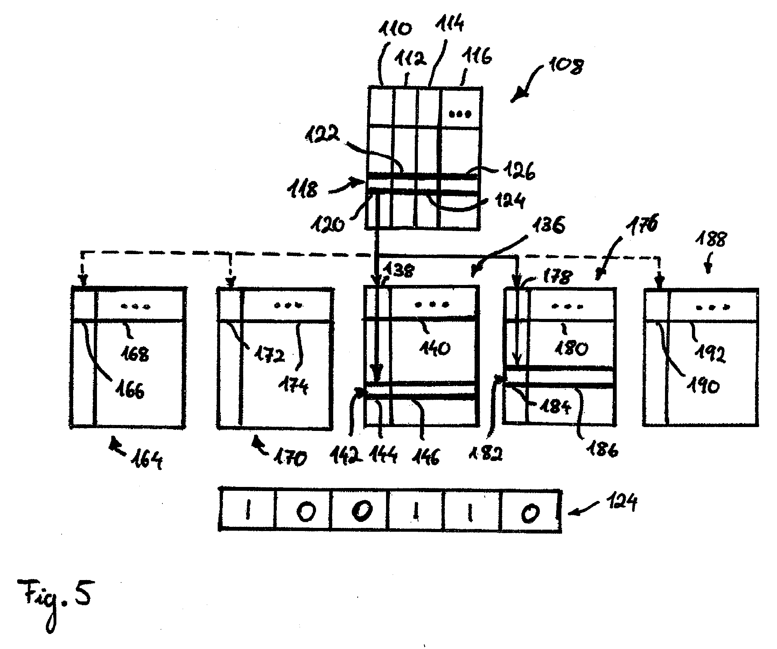

According to the alternative embodiment of the present invention, Fig. 5 shows a flow diagram of a method for operating the relational database 100 for storing a business object instance. The method is preferably implemented as a set of instruction, which can be executed by the RDBMS logic of the RDBMS 104 of the relational database 100. The relational database 100, for example, receives a business object instance from a client 200. By means of the RDBMS logic, in step 302, the relational database 100 stores the business object instance in the multiple tables comprised by the storage component 106. Thereby, in step 304, the relational database 100 generates a root key, by which the business object instance and in particular a root record of the business object instance is identifiable. In step 306, the relational database 100 stores the root key in the root record. In step 308, the relational database 100 stores metadata corresponding to the business object instance in the root record. In step 310, the relational database 100 determines a set from the multiple tables, wherein the set consists of each table that contains at least one record corresponding to the stored business object instance. In step 312, the relational database 100 generates a vector identifying the determined set. In step 314, the relational database 100 stores the vector in a root record stored in a root table comprised by the multiple tables. In step 316, the relational database 100 receives a query for the stored business object instance from the client 200, wherein the query identifies the root key. In step 318, the relational database 100 identifies the root record in the root table via the root key. In step 320, the relational database 100 reads out the vector from the root record. In step 322, the relational database 100 identifies the tables of the set from the read out vector. In step 324, the relational database 100 reads out all records corresponding to the example business object instance in parallel.

According to the alternative embodiment of the invention, the relational database 100 avoids running unnecessary operations on tables 164, 170, and 188, because the relational database 100 determines, from the bit vector 124, that only tables 108, 136, and 176 actually contain records corresponding to the example business object instance. Further, the relational database 100 requires only a single round trip for reconstructing the business object instance (apart from the read out of the root record). This follows from the fact that each table potentially comprising records corresponding to a business object instance comprises a root key column corresponding to the root key of the business object instance. Accordingly, the relational database 100 can retrieve all records corresponding to the example business object instance in parallel using the data stored in the root record 118: the root key 120 and the metadata 122, and the bit vector 124. Hence, in comparison to the prior art, the relational database 100 is more efficient with regard to time and computing resources.

Although the invention has been described with reference to specific example embodiments, it will be evident that various modifications and changes may be made to these embodiments without departing from the broader scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A method for operating a relational database for storing a business object instance, wherein the business object instance has at least one attribute, wherein the relational database comprises multiple tables, wherein one table of the multiple tables is a root table, wherein the method comprises the following steps:
(A) storing at least one attribute of the business object instance and/or at least one reference to at least one attribute of the business object instance in a subset of the multiple tables;
(B) determining the tables of the multiple tables that contain:
at least one attribute of the business object instance, and/or
at least one reference to at least one attribute of the business object instance;
(C) generating a vector identifying the tables determined in step (B); and
(D) storing the generated vector in the root table.

2. The method of claim 1, wherein attributes of the business object instance are stored in attribute records of the multiple tables, references to one or more attributes of the business object instance are stored in reference records of the multiple tables, and the generated vector is stored in a root record of the root table.

3. The method of one of the previous claims, wherein the vector is a bit vector comprising multiple bits, wherein each bit of the multiple bits refers to one table of the multiple tables.

4. The method of one of the previous claims, wherein the vector comprises a data type suitable for identifying any subset of the multiple tables.

5. The method of one of the previous claims, wherein the stored business object instance is identifiable by a root key, wherein the method further comprises the step:
(A1) storing the root key in the root table, preferably in the root record.

6. The method of one of the previous claims, wherein the method further comprises the step:
reading out, in parallel, each record that comprises the root key and that contains one or more attributes of the at least one attribute and/or one or more references to one or more attributes of the at least one attribute.

7. The method of one of the previous claims, wherein the method further comprises the step:
(A2) storing the root key in each record comprising an attribute of the at least one attribute or a reference to an attribute of the at least one attribute.

8. The method of one of the previous claims, wherein the method further comprises the following steps:
(E) receiving a query for the stored business object instance from a client, wherein the query preferably identifies the root key;
(F) identifying the root record in the root table, preferably via the root key;
(G) reading out the vector from the root record; and
(H) identifying the tables determined in step (B) from the read out vector.

9. The method of one of the previous claims, wherein a metadata identifies the multiple tables, wherein the metadata identifies a key type stored in each table of the multiple tables, wherein the method further comprises the step:
(A1.1) storing metadata in the root table, preferably in the root record.

10. The method of one of the previous claims, wherein the relational database is an in-memory database.

11. The method of one of the previous claims, wherein the relational database is a column store database, and wherein, preferably, each column storing the root key is compressed using a single dictionary.

12. A relational database for storing a business object instance, wherein the business object instance has at least one attribute, wherein the relational database comprises multiple tables, wherein one table of the multiple tables is a root table, wherein the relational database comprises:
a storage component comprising multiple tables; and
a relational database management system comprising a relational database management system logic for:
storing at least one attribute of the business object instance and/or at least one reference to at least one attribute of the business object instance in a subset of the multiple tables;
determining the tables of the multiple tables that contain:
at least one attribute of the business object instance, and/or
at least one reference to at least one attribute of the business object instance;
generating a vector identifying the tables determined in step (B); and
storing the generated vector in the root table.
